# EUROPÄISCHE PATENTSCHRIFT

(11) **EP 1 024 942 B1**
(45) Veröffentlichungstag und Bekanntmachung des Hinweises auf die Patenterteilung: **10.03.2004**
(21) Anmeldenummer: 98958813.2
(22) Anmeldetag: 14.10.1998
(51) Int. Cl.: B29C 53/80, B29C 41/08, B29C 41/26

(54) **VERFAHREN ZUM HERSTELLEN EINES ROTATIONSSYMMETRISCHEN KÖRPERS**
METHOD FOR PRODUCING A ROTATIONALLY SYMMETRIC BODY
PROCEDE DE PRODUCTION D'UN CORPS A SYMETRIE DE ROTATION

(30) Priorität: 31.10.1997 DE 19748060
(43) Veröffentlichungstag der Anmeldung: 09.08.2000
(73) Patentinhaber: PHOENIX AKTIENGESELLSCHAFT, 21079 Hamburg (DE)
(72) Erfinder: BRINK, Burkhard, D-21224 Rosengarten (DE); FRIEDERICH, Hans-Werner, D-21423 Winsen (DE); MEYER, Wolfgang, D-21244 Buchholz (DE)
(86) Internationale Anmeldenummer: PCT/DE1998/003015
(87) Internationale Veröffentlichungsnummer: WO 1999/022929

(56) Entgegenhaltungen:
- EP-A- 0 036 184
- WO-A-92/09507
- WO-A-96/01385
- DE-A- 3 421 364
- GB-A- 2 250 934

## Beschreibung

Die Erfindung betrifft ein Verfahren zum Herstellen eines rotationssymmetrischen Körpers, insbesondere eines Schlauches, insbesondere wiederum eines Großschlauches, umfassend wenigstens folgende Verfahrensschritte:
- auf einen rotierenden Kern als Tragkörper wird eine Innenschicht aus elastomerem Werkstoff aufgebracht;
- auf die Innenschicht wird nun ein Festigkeitsträger in Form mehrerer Fadenlagenschichten aufgebracht, wobei innerhalb einer Fadenlagenschicht die Fäden im wesentlichen parallel zueinander angeordnet zu liegen kommen, wobei wiederum ein durchlaufender und in steiler Schraubenlinienform den rotationssymmetrischen Körper bzw. Schlauch hin und her umlaufender Faden mehrere Fadenlagenschichten bei gekreuzter Anordnung von Schicht zu Schicht bildet, wobei eine parallel zum rotierenden Kern hin und her bewegbare Einrichtung zur Lagerung und Führung des Fadens in Form einer Wickeleinrichtung zur Bildung des Festigkeitsträgers verwendet wird;
- schließlich wird eine Außenschicht aus elastomerem Werkstoff aufgebracht, die den Festigkeitsträger abdeckt.

Ein gattungsgemäßes Verfahren ist aus der deutschen Offenlegungsschrift DE-A-33 33 522 bekannt, wobei nach diesem Verfahren insbesondere große Schläuche hergestellt werden, die an beiden Enden mit je einem Verbindungselement versehen sind. Diese Verbindungselemente sind vorzugsweise mit Ringwülsten versehene Stahlstutzen.

Nach dem Verfahren gemäß DE-A-33 33 522 wird nun vorteilhafterweise der Faden mittels einer elektronisch gesteuerten Wickeleinrichtung auf den um seine Längsachse in Rotation befindlichen Schlauchrohling aufgebracht. Der Faden verläuft dabei ständig über die Schlauchinnenschicht aus Gummi so hin und her, daß sich Faden neben Faden legt. Sobald der Faden über den Ringwulst hinweg gelaufen ist, ruht die Führung in der betreffenden Position für einen Teil der Umdrehung des Schlauchrohlings.

Bei den genannten Fäden kann es sich um Cordfäden, Litzen oder dünne Seile handeln. Auch monofile und multifile Fäden sollen unter der Bezeichnung "Fäden" zu verstehen sein. Als Material für diese Fäden können Synthesefasern wie Nylon, Polyester oder Aramid ebenso Verwendung finden, wie Stahl und andere in Schläuchen gebräuchliche Materialien. Material und Konstruktion des Fadens richten sich nach dem Anwendungsfall.

Sobald das Aufwickeln des Fadens abgeschlossen ist, erfolgt das Aufbringen der Schlauchaußenschicht aus Gummi, verbunden mit der anschließenden Vulkanisation.

Aus der deutschen Offenlegungsschrift DE-A-34 21 364 ist ferner ein Verfahren zum Herstellen von länglichen Hohlkörpern (z.B. Schlauch) bekannt, und zwar unter Verwendung eines rotierenden Kernes. Ihm sind vier Rollenböcke zugeordnet, von denen von Vorratsrollen einander überlappende Bahnen einer Trennfolie (z.B. Polyethylenfolie) ablaufen. Mittels mehrerer Gießköpfe wird nun ein flüssiges Material, wie Reaktionsgemisch oder Schmelze, auf die Trennfolie aufgebracht, und zwar insbesondere unter Einarbeitung einer Gewebebahn, die als Festigkeitsträger dient. Eine abschließende Vulkanisation entfällt bei diesem Verfahren.

In den Druckschriften EP-A-0 036 184 und EP-A-0 184 759 werden weitere Verfahren zur Herstellung schlauchförmiger Körper (Schläuche, Rohre) vorgestellt, wobei mittels eines Gießkopfes wenigstens zwei flüssige oder pastöse Komponenten zur Reaktion gebracht werden. Dabei wird in der EP-A-0 184 759 zusätzlich das Einbringen eines Fadens, der den Festigkeitsträger bildet, beschrieben.

Die Aufgabe der Erfindung besteht nun darin, das gattungsgemäße Verfahren zum Herstellen eines rotationssymmetrischen Körpers, insbesondere eines Schlauches, insbesondere wiederum eines Großschlauches, so weiter zu entwickeln, das die sichere Einarbeitung des den Festigkeitsträger bildenden Fadens in einen abriebfesten elastomeren Werkstoff gewährleistet ist, wobei die Vulkanisation entfällt. Vor allem sollen nach dem erfindungsgemäßen Verfahren hochbelastbare Großschläuche unter wirtschaftlichem Gesichtspunkt herstellbar sein.

Gelöst wird diese Aufgabe gemäß Kennzeichen des Patentanspruches 1 dadurch, daß
- in einem ebenfalls parallel zum rotierenden Kern hin und her bewegbaren Gießkopf mit einer Austrittsöffnung wenigstens zwei reaktive flüssige oder pastöse Komponenten zur Reaktion gebracht werden, wobei dann dieses Reaktionsgemisch, das an der Austrittsöffnung den Gießkopf verlässt, während seines Ausreagierens zu einer chemischen Verbindung auf den rotierenden Kern aufgebracht wird, und zwar unter Bildung der Innenschicht und Außenschicht; und daß femer
- bei der Bildung des Festigkeitsträgers der Faden in das Reaktionsgemisch einläuft, wobei die Einarbeitung des Fadens bei einem Reaktionsgrad von nicht mehr als 50 % erfolgt, und zwar bezogen auf den Beginn des Mischvorganges im Gießkopf, wobei femer bei der Einarbeitung des Fadens entweder
   - ein Gießkopf verwendet wird, der sich als getrenntes Maschinenteil synchron zur Faden-Einrichtung bewegt, wobei die Führung des Fadens direkt oberhalb der Austrittsöffnung des Gießkopfes erfolgt, wobei wiederum der Faden zunächst trocken auf die Innenschicht aufläuft und erst dann in das Reaktionsgemisch eingearbeitet wird; oder
   - ein Gießkopf mit integrierter Fadenführung verwendet wird.

Zweckmäßige Verfahrensvarianten sind in den Patentansprüchen 2 bis 7 genannt.

Die Erfindung wird nun anhand von Ausführungsbeispielen unter Bezugnahme auf schematische Zeichnungen erläutert. Es zeigen:
- Fig. 1: den Grundaufbau einer Schlauchwand (Längsschnitt);
- Fig. 2: den Verfahrensablauf unter Verwendung eines rotierenden Domes, Wickeleinrichtung und Gießkopfes (Querschnitt);
- Fig. 3: den Reaktionsablauf innerhalb des Gießkopfes;
- Fig. 4: einen Schwimmschlauch mit Auftriebskörper als rotierender Kern (Längsschnitt);
- Fig. 5: einen Schwimmschlauch mit Auftriebskörper und Außenhaut (Längsschnitt).
In Verbindung mit diesen Figuren gilt folgende Bezugsziffernliste: 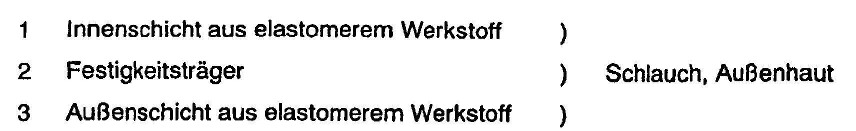
- 4: rotierender Kern in Form eines Domes
- 4': rotierender Kern in Form eines Schwimmschlauches mit Auftriebskörper
- 5: Einrichtung (Wickeleinrichtung) zur Lagerung und Führung des Fadens (hier nur das Fadenauge als Teil der Einrichtung dargestellt)
- 6: Faden
- 7: Auflaufposition des Fadens auf der Innenschicht
- 8: Gießkopf
- 9: Mischposition der Komponenten (A, B) im Gießkopf
- 10: Austrittsöffnung (Düse) des Gießkopfes
- 11: Schwimmschlauch
- 12: Stahlstutzen
- 13: Auftriebskörper
- 14: Außenhaut
- A: reaktive Komponente, vorzugsweise Polyol
- B: reaktive Komponente, vorzugsweise Polyisocyanat
- C: Reaktionsprodukt, vorzugsweise Polyurethan
- D: Innendurchmesser des Schwimmschlauches
- X: Rotationsachse des Schwimmschlauches
- H: Gesamthöhe des rotierenden Kernes
- H': oberer Ein-Drittel-Bereich des rotierenden Kernes

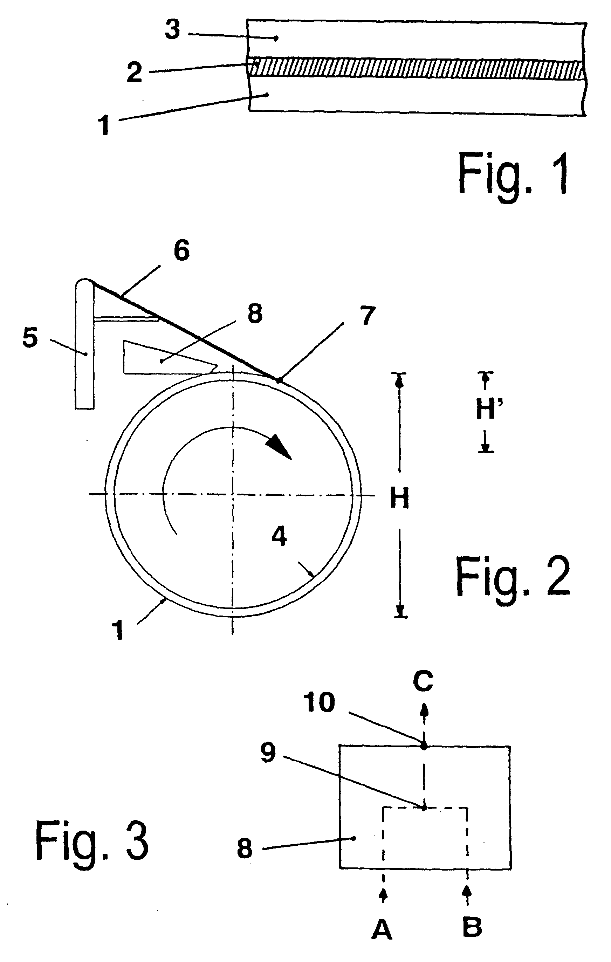

Nach Fig. 1 besteht die Schlauchwand aus einer Innenschicht **1** aus elastomerem Werkstoff, einem auf der Innenschicht aufgebrachten Festigkeitsträger **2** in Form mehrerer Fadenlagenschichten bei gekreuzter Anordnung von Schicht zu Schicht bei einem Winkel von vorzugsweise 40° bis 80° (DE-A-33 33 522; Fig. 2), sowie aus einer Außenschicht 3 aus elastomerem Werkstoff.

Fig. 2 zeigt nun einen rotierenden Kern **4** in Form eines Dornes, und zwar in Pfeilrichtung rotierend. Der Dorn ist dabei zugleich der Tragkörper für die Innenschicht **1**, die vorzugsweise wendelförmig unter Stoß aufgebracht wird.

Mittels einer parallel zum rotierenden Dorn hin und her bewegbaren Einrichtung **5**, in Form einer Wickeleinrichtung, läßt man nun den Faden 6 zunächst trocken auf die Innenschicht **1** auflaufen. Erst an der Auflaufposition **7** erfolgt dann die Einarbeitung des Fadens **6** in das Reaktionsgemisch, das im Gießkopf **8** (auch Mischkopf genannt) gebildet wird.

Der Gießkopf **8** ist ebenfalls parallel zum rotierenden Dorn hin und her bewegbar. Dabei wird hier ein Gießkopf verwendet, der sich als getrenntes Maschinenteil synchron zur Faden-Einrichtung **5** bewegt, und zwar unter Führung des Fadens **6** direkt oberhalb des Gießkopfes **8,** vorzugsweise direkt oberhalb seiner Austrittsöffnung **10** (Fig. 3). Die Austrittsöffnung des Gießkopfes wird dabei so angeordnet, daß das Reaktionsgemisch innerhalb des oberen Ein-Drittel-Bereiches **H'** des rotierenden Kernes **4**, und zwar bezogen auf seine Gesamthöhe **H**, aufgebracht wird.

Fig. 3 zeigt nun nochmals den Gießkopf **8,** wo die beiden reaktiven Komponenten **A** und **B** an der Position **9** vermischt werden. Das Reaktionsgemisch verläßt an der Austrittsöffnung **10** den Gießkopf.

Das Ausreagieren des Reaktionsgemisches zu einer chemischen Verbindung **C** erfolgt schnell, wobei die maximale Reaktionszeit je nach Art der Komponenten vier Minuten beträgt, wobei wiederum zumeist die Reaktion schon nach 60 Sekunden im wesentlichen abgeschlossen ist. Wichtig ist in diesem Zusammenhang, daß die Einarbeitung des Fadens **6** (Fig. 2) bei einem Reaktionsgrad von nicht mehr als 50 %, insbesondere von nicht mehr als 35 %, erfolgt, und zwar bezogen auf den Beginn des Mischvorganges im Gießkopf (Position **9**).

Für die Komponenten **A** und **B** stehen eine Vielzahl von Substanzen zur Verfügung. Wichtig ist, daß das Reaktionsprodukt **C** elastische wie auch abriebfeste Eigenschaften hat, zweckmäßigerweise auf der Basis von Polyurethan.

Bei dem Ausführungsbeispiel gemäß Fig. 2 sind die fadenführende Einrichtung **5** und der Gießkopf **8** als getrennte Maschinenteile ausgebildet. Alternativ hierzu kann bei der Einarbeitung des Fadens **6** auch ein Gießkopf mit integrierter Fadenführung verwendet werden. Die Tränkung des Fadens erfolgt dann unter Bezug auf die Fig. 3 entweder im Bereich zwischen der Mischposition **9** und der Austrittsöffnung **10** oder außerhalb der Austrittsöffnung.

Sobald unabhängig von den hier geschilderten Varianten der Fadenführung der Festigkeitsträger **2** gebildet ist, erfolgt das Aufbringen der Außenschicht **3** (Fig. 1), und zwar wiederum wie bei der Innenschicht **1** vorteilhafterweise wendelförmig unter Stoß.

Nach dem erfindungsgemäßen Verfahren können in den Schlauch an seinen beiden Enden Stahlstutzen oder andere Verbindungselemente eingearbeitet werden.

Um das Entdornen nach Fertigstellung des Schlauches zu erleichtern, wird vor der Bildung der Innenschicht **1** eine Trennschicht in Form einer Folie, von Wachs oder dergleichen auf den Dom **4** aufgebracht.

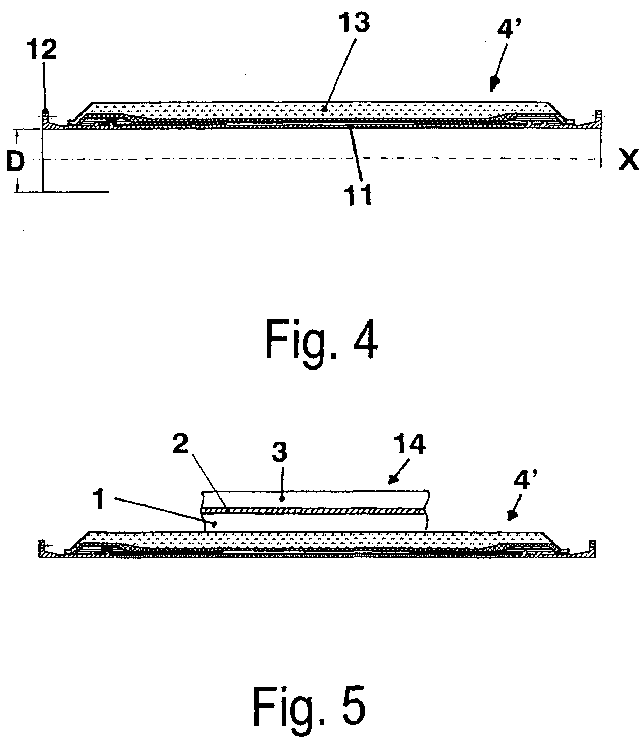

Nach Fig. **4** ist der rotierende Kern **4'** mit der Rotationsachse **X** ein Schwimmschlauch **11** mit dem Innendurchmesser **D,** der mit einem eingearbeiteten Stahlstutzen **12** an beiden Enden sowie mit einem Auftriebskörper **13** aus Schaumstoff versehen ist. Der Auftriebskörper ist dabei zumeist mit einer Außenhaut abgedeckt. Ein derartiger Schwimmschlauch ist beispielsweise in der internationalen Patentanmeldung mit der Veröffentlichungsnummer WO-A-96/01385 beschrieben.

Fig. 5 zeigt nun den Kern **4'** mit der Außenhaut **14,** umfassend eine Innenschicht **1**, einen Festigkeitsträger **2** sowie eine Außenschicht **3,** also einen Grundaufbau gemäß Fig. 1. Dabei ist die Außenhaut zwecks Verdeutlichung des Schichtenaufbaus im Vergleich zum Kern **4',** der hier im Gegensatz zu dem Dom **4** (Fig. 2) ein wesentlicher Teil des Endproduktes ist, stark vergrößert dargestellt.

Die Außenhaut **14** selbst wird auch hier nach dem Verfahren gemäß einem der Patentansprüche 1 bis 5 hergestellt.

## Patentansprüche

1. Verfahren zum Herstellen eines rotationssymmetrischen Körpers, insbesondere eines Schlauches, insbesondere wiederum eines Großschlauches, umfassend wenigstens folgende Verfahrensschritte:
- auf einen rotierenden Kern (4, 4') als Tragkörper wird eine Innenschicht (1) aus elastomerem Werkstoff aufgebracht;
- auf die Innenschicht (1) wird nun ein Festigkeitsträger (2) in Form mehrerer Fadenlagenschichten aufgebracht, wobei innerhalb einer Fadenlagenschicht die Fäden im wesentlichen parallel zueinander angeordnet zu liegen kommen, wobei wiederum ein durchlaufender und in steiler Schraubenlinienform den rotationssymmetrischen Körper bzw. Schlauch hin und her umlaufender Faden (6) mehrere Fadenlagenschichten bei gekreuzter Anordnung von Schicht zu Schicht bildet, wobei eine parallel zum rotierenden Kern (4, 4') hin und her bewegbare Einrichtung (5) zur Lagerung und Führung des Fadens (6) in Form einer Wickeleinrichtung zur Bildung des Festigkeitsträgers (2) verwendet wird;
- schließlich wird eine Außenschicht (3) aus elastomerem Werkstoff aufgebracht, die den Festigkeitsträger (2) abdeckt;
**dadurch gekennzeichnet, daß**
- in einem ebenfalls parallel zum rotierenden Kern (4, 4') hin und her bewegbaren Gießkopf (8) mit einer Austrittsöffnung (10) wenigstens zwei reaktive flüssige oder pastöse Komponenten (A, B) zur Reaktion gebracht werden, wobei dann dieses Reaktionsgemisch, das an der Austrittsöffnung den Gießkopf verlässt, während seines Ausreagierens zu einer chemischen Verbindung (C) auf den rotierenden Kern (4, 4') aufgebracht wird, und zwar unter Bildung der Innenschicht (1) und Außenschicht (3); und daß ferner
- bei der Bildung des Festigkeitsträgers (2) der Faden (6) in das Reaktionsgemisch einläuft, wobei die Einarbeitung des Fadens bei einem Reaktionsgrad von nicht mehr als 50 % erfolgt, und zwar bezogen auf den Beginn des Mischvorganges im Gteßkopf (8), wobei ferner bei der Einarbeitung des Fadens entweder
• ein Gießkopf verwendet wird, der sich als getrenntes Maschinenteil synchron zur Faden-Einrichtung (5) bewegt, wobei die Führung des Fadens direkt oberhalb der Austrittsöffnung (10) des Gießkopfes erfolgt, wobei wiederum der Faden zunächst trocken auf die Innenschicht aufläuft und erst dann in das Reaktionsgemisch eingearbeitet wird; oder
• ein Gießkopf mit integrierter Fadenführung verwendet wird.

2. Verfahren nach Anspruch 1, **dadurch gekennzeichnet, daß** als reaktive Komponenten ein Polyol (A) und ein Polyisocyanat (B) unter Bildung von Polyurethan (C) verwendet wird.

3. Verfahren nach Anspruch 1 oder 2, **dadurch gekennzeichnet, daß** die Einarbeitung des Fadens (6) bei einem Reaktionsgrad von nicht mehr als 35 % erfolgt.

4. Verfahren nach einem der Ansprüche 1 bis 3, **dadurch gekennzeichnet, daß** das Aufbringen der Innenschicht (1) und der Außenschicht (3) wendelförmig erfolgt, vorzugsweise unter Stoß.

5. Verfahren nach einem der Ansprüche 1 bis 4, **dadurch gekennzeichnet, daß** die Austrittsöffnung (10) des Gießkopfes (8) so angeordnet wird, daß das Reaktionsgemisch innerhalb des oberen Ein-Drittel-Bereiches (H') des rotierenden Kernes (4, 4'), und zwar bezogen auf seine Gesamthöhe (H), aufgebracht wird.

6. Verfahren nach einem der Ansprüche 1 bis 5, **dadurch gekennzeichnet, daß** als rotierender Kern (4) ein Dom verwendet wird, wobei nach Fertigstellung des rotationssymmetrischen Körpers bzw. Schlauches der Dom entfernt wird.

7. Verfahren nach einem der Ansprüche 1 bis 5, **dadurch gekennzeichnet, daß** als rotierender Kern (4') ein vorgebildeter rotationssymmetrischer Körper aus elastomerem Werkstoff mit zumeist eingebettetem Festigkeitsträger, insbesondere ein Schwimmschlauch (11) mit Auftriebskörper (13), verwendet wird, der nach der Verfahrensweise gemäß einem der Ansprüche 1 bis 9 mit einer Außenhaut (14), umfassend eine Innenschicht (1), einen Festigkeitsträger (2) sowie eine Außenschicht (3), versehen wird.

## Claims

1. Method for producing a rotationally symmetrical body, in particular a hose, in particular again a large hose, comprising at least the following steps:
- an inner layer (1) of elastomer material is applied to a rotating core (4, 4'),
- a strength carrier (2) in the form of a plurality of layers of threads is applied to the inner layer (1), whereby inside a layer of threads the threads come to rest disposed essentially parallel to one another, whereby again a continuous thread (6) running around the rotationally symmetrical body or hose to and fro in a steep helical pattern forms a plurality of layers of threads in a crossed arrangement from layer to layer, whereby a device (5) movable to and fro parallel to the rotating core (4, 4') for storing and guiding the thread (6), in the form of a winding device, is used to form the strength carrier (2),
- lastly an outer layer (3) of elastomer material is applied which covers the strength carrier (2), **characterised in that**
- at least two reactive liquid or pastey components (A, B) are made to react in a moulding head (8) with an outlet opening (10) also movable to and fro parallel to the rotating core (4, 4'), whereby then this reaction mixture, leaving the moulding head through the outlet opening, is applied to the rotating core (4, 4') during its reaction producing a chemical compound (C), forming the inner layer (1) and outer layer (3), and **in that** further
- during the formation of the strength carrier (2) the thread (6) runs into the reaction mixture, whereby the incorporation of the thread takes place with a reaction level of no more than 50%, in relation to the start of the mixing operation in the moulding head (8), and whereby further when the thread is incorporated, either
• a moulding head is used which moves as a separate machine part synchronously with the thread device (5), whereby the guidance of the thread is effected directly over the outlet opening (10) of the moulding head, whereby again the thread initially runs on to the inner layer dry and only then is incorporated into the reaction mixture; or
• a moulding head with an integral thread guide is used.

2. Method according to claim 1, **characterised in that** a polyol (A) and a polyisocyanate (B) are used as reactive components forming polyurethane (C).

3. Method according to claim 1 or 2, **characterised in that** the incorporation of the thread (6) takes place with a reaction level of not more than 35%.

4. Method according to one of claims 1 to 3, **characterised in that** the application of the inner layer (1) and the outer layer (3) is effected helically, preferably in abutment.

5. Method according to one of claims 1 to 4, **characterised in that** the outlet opening (10) of the moulding head (8) is arranged so that the reaction mixture is applied within the upper third (H') of the rotating core (4, 4'), relative to its total height (H).

6. Method according to one of claims 1 to 5, **characterised in that** a mandrel is used as the rotating core (4), the mandrel being removed after completion of the rotationally symmetrical body or hose.

7. Method according to one of claims 1 to 5, **characterised in that** a preformed rotationally symmetrical body made of elastomer material with a generally embedded strength carrier, in particular a buoyant hose (11) with a float (13), is used as the rotating core (4'), which is provided by the procedure according to one of claims 1 to 9 with an outer skin (14) comprising an inner layer (1), a strength carrier (2) and an outer layer (3).

## Revendications

1. Procédé de fabrication d'un corps répondant à une symétrie de rotation, en particulier un tuyau, en particulier de nouveau, un gros tuyau, comprenant au moins les étapes de procédé suivantes :
- sur un noyau (4, 4') rotatif, servant de corps support, on applique une couche intérieure (1) en matériau élastomère ;
- sur la couche intérieure (1), à présent on applique un support de résistance (2) se présentant sous la forme d'une pluralité de couches de strates de fils, sachant que, à l'intérieur d'une couche de strate de fils, les fils viennent se placer en étant disposés sensiblement parallèlement les uns aux autres, sachant que, de nouveau, un fil (6), continu et à forme hélicoïdale à pente raide, entourant, dans un sens et dans l'autre, le corps, respectivement le tuyau, répondant à une symétrie de rotation, forme une pluralité de couches de strates de fils avec un agencement croisé d'une couche à une autre, sachant que, pour placer et guider le fil (6), on utilise un dispositif (5) réalisé sous la forme d'un dispositif d'enroulement afin de former le support de résistance (2), le dispositif (5) étant déplaçable dans un sens et dans l'autre, parallèlement au noyau (4, 4') rotatif ;
- enfin, on applique une couche extérieure (3) en matériau élastomère, qui recouvre le support de résistance ;
**caractérisé en ce que**,
- dans une tête de coulée (8), déplaçable dans un sens et dans l'autre également parallèlement au noyau (4, 4') rotatif, tête munie d'une ouverture de sortie (10), on met en réaction au moins deux composants (A, B) liquides ou pâteux, réactifs, sachant que, ensuite, ce mélange de réaction, qui quitte la tête de coulée par l'ouverture de sortie, est appliqué sur le noyau (4, 4') rotatif pendant sa réaction devant donner une liaison chimique (C) et précisément, en formant la couche intérieure (1) et la couche extérieure (3) ; et **en ce que**, en outre,
- lors de la formation du support de résistance (3), le fil (6) s'introduit dans le mélange de réaction, le travail d'insertion du fil se faisant avec un degré de réaction non supérieur à 50 % et, précisément, en se référant au début du processus de mélange dans la tête de coulée (6), sachant que, en outre, lors du façonnage d'intégration du fil,
• soit on utilise une tête de coulée qui se déplace en tant que partie de machine séparée, de façon synchrone par rapport au dispositif à fil (5), le guidage du fil se faisant directement au-dessus ou en amont de l'ouverture de sortie (10) de la tête de coulée, sachant que, à son tour, le fil passe d'abord à l'état sec sur la couche intérieure, et est ensuite intégré dans le mélange de réaction ; ou
• soit on utilise une tête de coulée à guidage de fil intégré.

2. Procédé selon la revendication 1, **caractérisé en ce qu'**on utilise comme composant réactif un polyol (A) et un polyisocyanate (B), en formant du polyuréthane (C).

3. Procédé selon la revendication 1 ou 2, **caractérisé en ce que** le façonnage d'intégration du fil (6) se fait avec un degré de réaction non supérieur à 35 %.

4. Procédé selon l'une des revendications 1 à 3, **caractérisé en ce que** l'application de la couche intérieure (1) et la couche extérieure (3) se fait en forme d'hélice, de préférence à spires jointives.

5. Procédé selon l'une des revendications 1 à 4, **caractérisé en ce que** l'ouverture de sortie (10) de la tête de coulée (8) est disposée de manière que le mélange de réaction soit appliqué à l'intérieur de la zone de tiers supérieur (H') du noyau (4, 4') rotatif et, précisément, en se référant à sa hauteur totale (H).

6. Procédé selon l'une des revendications 1 à 5, **caractérisé en ce qu'**on utilise comme noyau rotatif (4) un mandrin, le mandrin étant enlevé une fois le corps, ou le tuyau répondant à une symétrie de rotation, parachevé.

7. Procédé selon l'une des revendications 1 à 5, **caractérisé en ce qu'**on utilise comme noyau rotatif (4') un corps répondant à une symétrie de rotation, préformé, réalisé en un matériau élastomère, avec un support de résistance majoritairement incorporé, en particulier, un tuyau flottant (11) avec un corps de flottaison (13) qui, selon le mode de procéder selon l'une des revendications 1 à 9, est muni d'une peau extérieure (14), comprenant une couche intérieure (1), un support de résistance (2), ainsi qu'une couche extérieure (3).
